(19)

**Europäisches Patentamt**
**European Patent Office**
**Office européen des brevets**

(11) **EP 4 535 649 A1**

(12) **EUROPÄISCHE PATENTANMELDUNG**

(43) Veröffentlichungstag:
09.04.2025 Patentblatt 2025/15

(21) Anmeldenummer: 23202010.7

(22) Anmeldetag: 06.10.2023

(51) Internationale Patentklassifikation (IPC):
*H02P 21/36* (2016.01) *B25F 5/00* (2006.01)

(52) Gemeinsame Patentklassifikation (CPC):
**H02P 21/36; B25F 5/00;** B28D 1/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Scherbaum, Markus**
**86853 Gennach (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM BREMSEN EINER WERKZEUGMASCHINE UND WERKZEUGMASCHINE**

(57) Die vorliegende Erfindung betrifft ein Verfahren zum Bremsen einer Werkzeugmaschine, wobei die Werkzeugmaschine eine netzbetriebene Werkzeugmaschine ist und elektrische Energie, die beim Bremsen der Werkzeugmaschine frei wird, in einen Zwischenkreis der Werkzeugmaschine zurückgespeist und anschließend komplett als Verlustleistung in Komponenten der Werkzeugmaschine umgesetzt werden. Die Erfindung macht von dem Grundgedanken Gebrauch, dass die Bremsleistung reduziert wird, wenn der Zwischenkreise bzw. die Zwischenkreiskapazität ihre Grenzen für die Aufnahme elektrischer Energie erreicht hat. Diese Reduzierung der Bremsleistung kann durch eine Verkürzung eines Stromraumzeigers mit Hilfe von Korrekturfaktoren oder durch seine Drehung in einer Raumzeigerdarstellung bewirkt werden. In einem zweiten Aspekt betrifft die Erfindung eine Werkzeugmaschine zur Durchführung des Bremsverfahrens.

Fig. 7

**Beschreibung**

Die vorliegende Erfindung betrifft ein Verfahren zum Bremsen einer Werkzeugmaschine, wobei die Werkzeugmaschine eine netzbetriebene Werkzeugmaschine ist und elektrische Energie, die beim Bremsen der Werkzeugmaschine frei wird, in einen Zwischenkreis der Werkzeugmaschine zurückgespeist und in Komponenten der Werkzeugmaschine als Verlustleistung umgesetzt wird. Die Erfindung macht von dem Grundgedanken Gebrauch, dass die Bremsleistung reduziert wird, wenn der Zwischenkreis und die Verlustleistung in verschiedenen Komponenten der Werkzeugmaschine ihre Grenzen für die Aufnahme elektrischer Energie erreicht haben. Diese Reduzierung der Bremsleistung kann durch eine Verkürzung eines Stromraumzeigers oder durch seine Drehung in einer Raumzeigerdarstellung mit Hilfe von einem Korrekturfaktor bewirkt werden. In einem zweiten Aspekt betrifft die Erfindung eine Werkzeugmaschine zur Durchführung des Bremsverfahrens.

**Hintergrund der Erfindung:**

Im Bereich der Werkzeugmaschinen ist es bekannt, die Werkzeuge der Werkzeugmaschinen abzubremsen, um eine Arbeit zu beenden oder aus Sicherheitsgründen. Im Stand der Technik sind insbesondere die folgenden Bremsverfahren bekannt: Kurzschlussbremsen, Verwendung eines Bremschoppers als Bremswiderstand und Rekuperation.

Beim Kurzschlussbremsen wird der Motor der Werkzeugmaschine kurzgeschlossen. Dies kann beispielsweise dadurch erreicht werden, dass alle Lowside-Halbleiter des Motorinverters gleichzeitig eingeschaltet werden. Es kann sich ein anfänglich höherer Anfangskurzschluss-Strom ausbilden, der anschließend in einen Dauerkurzschluss-Strom übergeht. Der Kurschluss-Strom erzeugt im Motor der Werkzeugmaschine ein Bremsmoment, mit dem die Werkzeugmaschine bzw. ihr Werkzeug abgebremst werden kann. Nachteilig am Kurzschlussbremsen ist es, dass der Nutzer kaum Einfluss auf das Bremsmoment bzw. die Bremszeit hat. Die Höhe des Kurzschluss-Stroms wird lediglich durch Motorparameter bestimmt. Darüber hinaus muss die Elektronik der Werkzeugmaschine den zu Beginn des Kurzschlussbremsens vergleichsweise hohen Anfangs-Kurzschluss-Strom führen können. Wenn die Werkzeugmaschine nicht dafür ausgelegt ist, solche Kurzschluss-Ströme auszuhalten, kann es zu Beschädigungen an der Werkzeugmaschine bzw. ihrer Elektronik kommen.

Bei der Verwendung eines Bremschoppers als Bremswiderstand kann der Motor der Werkzeugmaschine geregelt gebremst werden, so dass er zum Generator wird. Die abgegebene Energie kann in einen Zwischenkreis der Elektronik der Werkzeugmaschine zurückgespeist werden. Die Werkzeugmaschine kann einen Bremschopper als Bremswiderstand aufweisen, wobei der Bremsshopper dazu eingerichtet ist, einen Widerstand an den Zwischenkreis anzuschließen, um auf diese Weise die Energie im Bremswiderstand in Wärme umzuwandeln. Obwohl die Verwendung eines Bremschoppers mehr Freiheitsgrade bei der Erreichung bestimmter gewünschter Bremsmomente bzw. Bremszeiten gewährt, besteht ein Nachteil bei der Verwendung eines Bremschoppers darin, dass zumindest ein zusätzliches Hardware-Bauteil in der Werkzeugmaschine verbaut werden muss. Dies erhöht das Gewicht der Werkzeugmaschine und ihr Volumen. Unter einem größeren Volumen kann beispielsweise die Ergonomie bzw. die Handhabbarkeit der Werkzeugmaschine leiden. Häufig zieht der Einbau eines Bremschoppers auch das Erfordernis weiterer zusätzlicher Elektronik-Bauteile, wie MOSFETs, Gatetreiber oder Anschlusslitzen, mit sich, was insbesondere auch die Herstellung bzw. den Zusammenbau der Werkzeugmaschine erschweren kann. Insbesondere dann, wenn der Bremschopper für hohe Pulsleistungen ausgelegt sein soll, können die Kosten für die Werkzeugmaschine, sowie der Bauraumbedarf im Inneren der Werkzeugmaschine erheblich steigen.

Das Rekuperieren ist nur dann möglich, wenn rückspeisefähige Energieversorgungsvorrichtungen in der Werkzeugmaschine verwendet werden. Der Motor der Werkzeugmaschine kann beim Rekuperieren geregelt gebremst und dadurch zum Generator werden. Die abgegebene Energie kann in den Zwischenkreis zurückgespeist und von dort in die Energieversorgungsvorrichtungen transferiert werden. Bei netzbetriebenen Werkzeugmaschinen wird in der Regel in Gleichrichter verwendet, welcher nur einen Energiefluss vom Netz zum Zwischenkreis ermöglicht. Eine Rekuperation ist dort nicht möglich.

Die Aufgabe, die der vorliegenden Erfindung zugrunde liegt, besteht darin, die vorstehend beschriebenen Mängel und Nachteile des Standes der Technik zu überwinden und Verfahren zum Abbremsen einer Werkzeugmaschine, sowie eine Werkzeugmaschine bereitzustellen, so dass einerseits ein möglich wirksamer Schutz eines Nutzers der Werkzeugmaschine ermöglicht werden kann, andererseits eine kompakte, handliche Werkzeugmaschine bereitgestellt werden kann. Darüber hinaus soll die freiwerdende Energie bestmöglichst in den Zwischenkreis zurückgespeist werden und anschließend im Wesentlichen vollständig als Verlustleistung in Komponenten der Werkzeugmaschine umgesetzt werden, um eine möglichst ressourcenschonende Werkzeugmaschine bereitstellen zu können, die keine zusätzlichen Komponenten, wie beispielsweise einen Bremschopper, benötigt.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Bremsen einer Werkzeugmaschine vorgesehen, wobei die Werkzeugmaschine eine netzbetriebene Werkzeugmaschine ist und elektrische Energie, die beim Bremsen der Werkzeugmaschine frei wird, in einen Zwischenkreis der Werkzeugmaschine zurückgespeist und als Verlustleistung in Komponenten der Werkzeugmaschine umgesetzt wird. Das Bremsverfahren durch folgende Verfahrensschritte gekennzeichnet:

a) Betrieb der Werkzeugmaschine unter Vorgabe eines ersten Stromwerts,

b) Rückspeisung der elektrischen Energie, die beim Bremsen der Werkzeugmaschine frei wird, in den Zwischenkreis der Werkzeugmaschine,

c) Reduzierung einer Bremsleistung der Werkzeugmaschine, wenn ein Grenzwert der Spannung des Zwischenkreises überschritten wird,

d) Weiterbetrieb der Werkzeugmaschine mit Sollstromwerten, wobei die Sollstromwerte basierend auf der Reduzierung der Bremsleistung der Werkzeugmaschine und des ersten Stromwerts ermittelt werden.

Die Rückspeisung in den Zwischenkreis ist hierbei immer verlustbehaftet, es entstehen hier immer in Komponenten der Werkzeugmaschine Verlustleistungen, die dort in Wärme umgesetzt werden. Die Komponenten können insbesondere Motor und Elektronik sein. Es ist vorteilhaft, wenn die Werkzeugmaschine während des Bremsverfahrens einen Arbeitspunkt mit schlechterem Wirkungsgrad einnimmt, um höhere Verluste in den Komponenten der Werkzeugmaschine zu erzeugen. Es ist im Sinne der Erfindung ganz besonders bevorzugt, dass die elektrische Energie, die beim Bremsen der Werkzeugmaschine frei wird, in eine Zwischenkreiskapazität bzw. in einen Zwischenkreiskondensator der Werkzeugmaschine zurückgespeist wird. Der Zwischenkreis kann vorzugsweise einen oder mehrere Zwischenkreiskondensatoren umfassen, die durch die Zwischenkreiskapazität gekennzeichnet werden. Vorzugsweise kann die Zwischenkreiskapazität durch den Zwischenkreiskondensator oder die mehreren Zwischenkreiskondensatoren des Zwischenkreises festgelegt werden.

Mit dem Verfahren kann einerseits eine möglichst kurze Bremszeit ermöglicht werden, andererseits eine kompakte, handliche Werkzeugmaschine - vorzugsweise ohne Bremschopper - bereitgestellt werden. Durch die besonders kurze Bremszeit kann der Nutzer der Werkzeugmaschine besonders wirksam vor Verletzungen geschützt werden. Das vorgeschlagene Verfahren ermöglicht vorteilhafterweise eine Zurückspeisung von elektrischer Energie in den Zwischenkreis in einer Werkzeugmaschine unter Ausnutzung der Verlustleistungen verschiedener Komponenten der Werkzeugmaschine.

Mit dem Verfahren ist es vorteilhafterweise möglich, mit der freiwerdenden Bremsenergie zuerst den Zwischenkreis auf einen maximal zulässigen Grenzwert aufzuladen und anschließend die Bremsleistung derart zu reduzieren, dass der Spannungsgrenzwert im Zwischenkreis nicht überschritten wird. Die Elektronik der Werkzeugmaschine und ihr Motor können dabei zunächst in einem optimalen Arbeitspunkt mit besonders geringer Verlustleistung betrieben werden, um den Zwischenkreis auf den zulässigen Spannungsgrenzwert aufzuladen. Wenn die Bremsleistung reduziert werden muss, kann die Elektronik der Werkzeugmaschine und ihr Motor anschließend in einem ineffizienten Arbeitspunkt mit höherer beziehungsweise höchstmöglicher Verlustleistung betrieben werden.

Um einen optimalen Arbeitspunkt zu erreichen, kann die Werkzeugmaschine beispielsweise entlang einer verlustleistungsoptimierten Kennlinie betrieben werden. Die Formulierung, dass der Betrieb der Werkzeugmaschine entlang einer verlustleistungsoptimierten Kennlinie erfolgt, bedeutet im Sinne der Erfindung bevorzugt, dass die Verluste bei Betrieb der Werkzeugmaschine mit der Erfindung minimiert werden können. Dabei kann es sich beispielsweise um Eisen- und/oder Kupferverluste handeln. Die Formulierung, dass der Betrieb der Werkzeugmaschine entlang einer verlustleistungsoptimierten Kennlinie erfolgt, kann im Sinne der Erfindung darüber hinaus bedeuten, dass die Werkzeugmaschine in Bezug auf die Stromausbeute und/oder den Wirkungsgrad optimiert betrieben wird.

Es ist im Sinne der Erfindung bevorzugt, dass die Werkzeugmaschine entlang einer MTPA-Kennlinie in einer Raumzeigerdarstellung betrieben wird, wobei die Abkürzung MTPA für "maximum torque per Ampere" steht, d.h. für ein maximales Drehmoment pro Ampere. Dadurch kann die Werkzeugmaschine vorteilhafterweise mit einer optimalen Stromausbeute betrieben werden. Es hat sich gezeigt, dass der Betrieb der Werkzeugmaschine auf diese Weise besonders verlustarm bzw. verlustleistungsarm erfolgen kann. Vorzugsweise wird im Kontext der Erfindung ein maximaler Motorstatorsollstrom $I\_S$, max vorgegeben, der im Sinne der Erfindung bevorzugt auch als maximaler Motorstrom $I\_S$, max bezeichnet wird. Dieser maximale Motorstrom $I\_S$, max kann somit einen ersten Stromwert im Sinne der Erfindung darstellen. Bei einer zu hohen Bremsleistung kann es allerdings dazu kommen, dass der Spannungsgrenzwert des Zwischenkreises, die einen sicheren Betrieb der Zwischenkreiskapazität sicherstellen sollen, überschritten wird. Es ist im Sinne der Erfindung bevorzugt, dass der Zwischenkreisspannungs-Grenzwert als $U\_ZK$, max bezeichnet wird.

Alternativ oder ergänzend kann es sich bei dem ersten Stromwert um den Motorsollstrom I_S, soll handeln. Es ist im Sinne der Erfindung bevorzugt, dass das Überschreiten eines Grenzwerts der Zwischenkreisspannung durch eine aktive Regelung der Zwischenkreisspannung verhindert wird. Dazu wird, vorzugsweise nachdem eine Überschreitung des ZwischenkreisspannungsGrenzwertes erkannt wurde, eine Reduzierung der Bremsleistung der Werkzeugmaschine initiiert. Erfindungsgemäß ist dazu vorgesehen, dass Sollstromwerte berechnet und ausgegeben werden, wobei die Ermittlung der Sollstromwerte basierend auf der Reduzierung der Bremsleistung der Werkzeugmaschine und des ersten Stromwerts erfolgt. Es ist im Sinne der Erfindung bevorzugt, dass die Sollstromwerte aus dem Verfahrensschritt d) des vorgeschlagenen Verfahrens Sollstromwerte für die d- und die q-Achse der Raumzeigerdarstellung sind. Die Sollstromwerte für die d- und die q-Achse können somit geänderte bzw. zweite Stromwerte darstellen, mit denen der Betrieb der Werkzeugmaschine fortgeführt werden kann. Durch den Weiterbetrieb der Werkzeugmaschine mit den geänderten Sollstromwerten, vorzugsweise für die d- und die q-Achse der Raumzeigerdarstellung, kann eine Reduzierung der Bremsleistung der Werkzeugmaschine sichergestellt werden, so dass der Grenzwert der Zwischenkreisspannung nicht überschritten wird, aber dennoch ein sicheres und schnelles Bremsen der Werkzeugmaschine ermöglicht wird.

In einer besonders bevorzugten Ausgestaltung der Erfindung kann die Werkzeugmaschine beispielsweise mit einem Motorsollstrom I_S, soll betrieben werden. Es kann darüber hinaus ein maximaler Motorstrom I_S, max vorgegeben werden, wobei die Bremsleistung der Werkzeugmaschinereduziert wird, wenn der Grenzwert der Zwischenkreisspannung überschritten wird. Die Bremsleistung der Werkzeugmaschine kann insbesondere dadurch reduziert werden, dass ein Stromraumzeiger I_S, max in der Raumzeigerdarstellung durch Anwendung eines geänderten Bremswinkels β_brems so gedreht wird, dass eine Länge des Stromraumzeigers I_S, max im Wesentlichen unverändert bleibt. Durch die Drehung des Stromraumzeigers I_S, max können die geänderten Sollstromwerte, vorzugsweise für die d- und die q-Achse der Raumzeigerdarstellung, ermittelt und die Bremsleistung der Werkzeugmaschine auf diese Weise verringert werden. Es ist in dieser Ausgestaltung der Erfindung bevorzugt, dass mit Hilfe des maximalen Statorstroms I_S, max und dem Bremswinkel β_brems die Sollstromwerte, vorzugsweise für die d- und q-Achse des Raumzeigerdarstellung, ermittelt werden, wobei die Sollstromwerte, vorzugsweise für die d- und q-Achse, als Ausgangs- oder Stellgröße dem weiterem Abbremsverfahren zugrunde gelegt werden sollen.

In einem Ausführungsbeispiel betrifft die Erfindung ein Verfahren zum Bremsen einer Werkzeugmaschine, wobei die Werkzeugmaschine eine netzbetriebene Werkzeugmaschine ist und elektrische Energie, die beim Bremsen der Werkzeugmaschine frei wird, in einen Zwischenkreis der Werkzeugmaschine zurückgespeist und als Verlustleistung in Komponenten der Werkzeugmaschine umgesetzt wird. Das Verfahren wird durch die folgenden Verfahrensschritte gekennzeichnet:

a) Betrieb der Werkzeugmaschine entlang einer MTPA-Kennlinie in einer Raumzeigerdarstellung unter Vorgabe eines ersten Stromwerts,

b) Rückspeisung der elektrischen Energie, die beim Bremsen der Werkzeugmaschine frei wird, in den Zwischenkreis der Werkzeugmaschine,

c) Reduzierung einer Bremsleistung der Werkzeugmaschine, wenn ein Grenzwert der Spannung des Zwischenkreises überschritten wird,

d) Weiterbetrieb der Werkzeugmaschine mit Sollstromwerten für die d- und die q-Achse der Raumzeigerdarstellung, wobei die Sollstromwerte für die d- und die q-Achse basierend auf der Reduzierung der Bremsleistung der Werkzeugmaschine und des ersten Stromwerts berechnet werden.

Es ist im Sinne der Erfindung bevorzugt, dass auch im Falle der Drehung des Stromraumzeiger I_S, max ein Korrekturfaktor k_red ermittelt werden kann. Vorzugsweise kann der Korrekturfaktor k_red auf eine Winkellage des Stromraumzeigers I_S,max angewendet werden, so dass eine Drehung des Stromraumzeigers I_S,max mit einem geänderten Bremswinkel ß_brems erhalten wird.

In einer weiteren besonders bevorzugten Ausgestaltung der Erfindung kann die Bremsleistung der Werkzeugmaschine dadurch reduziert werden, dass mindestens ein Korrekturfaktor k_red ermittelt und auf den maximalen Motorstrom I_S, max angewendet wird. Dadurch kann ein reduzierter Sollwert I_S, red für den Motorstrom erhalten werden, basierend auf dem dann wieder die geänderten Sollstromwerte, vorzugsweise für die d- und die q-Achse der Raumzeigerdarstellung, ermittelt und die Bremsleistung der Werkzeugmaschine auf diese Weise verringert werden. Der reduzierte Sollwert I_S, red für den Motorstrom kann an einen Motorstromregler weitergegeben werden, so dass der Motorstrom basierend auf dem reduzierten Sollwert I_S, red geregelt bzw. eingestellt werden kann. Es ist im Sinne der Erfindung bevorzugt, dass in dieser Ausgestaltung die Bremsleistung der Werkzeugmaschine dadurch reduziert wird, dass der Stromraumzeiger verkürzt wird. Mit anderen Worten für die Anwendung des Korrekturfaktors k_red auf den maximalen Motorstrom I_S, max zu einer Verkürzung des Stromraumzeiger, wodurch vorteilhafterweise die Bremsleistung der Werkzeugmaschine dadurch reduziert werden kann.

In einer weiteren besonders bevorzugten Ausgestaltung der Erfindung kann die Werkzeugmaschine unter Vorgabe des maximalen Motorstroms I_S, max betrieben werden. Die die Bremsleistung der Werkzeugmaschine kann entweder dadurch verringert werden, dass mindestens einem Korrekturfaktors k_red ermittelt und auf den maximalen Motorstrom I_S, max angewendet wird, so dass ein reduzierter Sollwert I_S, red für den Motorstrom erhalten wird oder dadurch, dass der Stromraumzeiger I_S, max in der Raumzeigerdarstellung gedreht wird, so dass eine Länge des Stromraumzeigers I_S, max im Wesentlichen unverändert bleibt. Die Drehung des Stromraumzeigers I_S, max kann vorzugsweise dadurch erfolgen, dass ein geänderter Bremswinkel β_brems auf den Stromraumzeiger I_S, max angewendet wird.

Durch die Drehung des Stromraumzeigers I_S, max kann ein Arbeitspunkt des Motors der Werkzeugmaschine auf ein geringeres Drehmoment und damit auch eine geringere Bremsleistung eingestellt werden, ohne die Statorstromamplitude zu verkleinern. Dieser hohe Statorstrom kann dann weiter hohe Verluste innerhalb eines Inverters, der Elektronik und/oder des Motors verursachen, so dass die Bremsenergie aufgenommen und in Wärme umgewandelt werden kann. Dadurch kann vorteilhafterweise eine größere Leistungssenke geschaffen und der Bremsvorgang noch schneller gemacht werden. Insbesondere kann durch die Anwendung des geänderten Bremswinkels β_brems und der dadurch bewirkten Drehung des Stromraumzeigers I_S, max in der Raumzeigerdarstellung ein mit großen Verlusten behafteter generatorischer Bremsbetrieb für eine Werkzeugmaschine zum Abbremsen ihres Werkzeugs bereitgestellt werden, wobei das vorgeschlagene Verfahren zunächst ohne einen Bremschopper auskommt. Vorzugsweise kann der Bremswinkels β_brems im Sinne der Erfindung bevorzugt auch als "Statorstromraumzeigerwinkel β_brems" bezeichnet werden.

Es ist im Sinne der Erfindung bevorzugt, dass bei der Drehung des Stromraumzeigers I_S, max zur Reduzierung der Bremsleistung der Zwischenkreis-Spannungsregler dazu verwendet wird, einen Korrekturfaktor als Stellgröße zu ermitteln bzw. auszugeben. Eine solche Reduzierung der Bremsleistung ist insbesondere dann bevorzugt, wenn die Zwischenkreiskapazität und ein optionaler Bremswiderstand, wie ein Bremschopper, ihre maximale Leistungsaufnahme erreicht haben. Dadurch kann vorteilhafterweise erreicht werden, dass der Zwischenkreisspannungs-Grenzwert eingehalten wird und die Zwischenkreiskapazität nicht beschädigt wird. Insbesondere kann durch die Drehung des Stromraumzeigers ein Arbeitspunkt in der Raumzeigerdarstellung mit einem verringerten Bremsmoment erhalten werden. Das verringerte Bremsmoment kann insbesondere durch einen verkürzten Stromraumzeiger und/oder durch einen gedrehten Stromraumzeiger erhalten werden.

Der Korrekturfaktor k_red kann von verschiedenen Quellen und Reglern als Ausgangsgröße gebildet werden. Beispielsweise kann ein Korrekturfaktor k_red von einem Zwischenkreis-Spannungsrelger gebildet werden. Für den Korrekturfaktor k_red kann auch das Tastverhältnis eines optionalen Bremschoppers bei der Berechnung des Bremswinkels mittels eines Tastverhältnis-Reglers berücksichtigt werden. Dies insbesondere dann, wenn die Werkzeugmaschine einen Bremschopper aufweist. Es ist im Sinne der Erfindung bevorzugt, dass der Korrekturfaktor k_red auch eine Abhängigkeit umfasst, der mit dem Tastverhältnis des Bremschoppers in Verbindung steht. Dies insbesondere dann, wenn die Werkzeugmaschine einen Bremschopper aufweist. Der Korrekturfaktor k_red kann somit für den Zwischenkreisspannungs-Regler-Korrekturfaktor stehen oder für einen Korrekturfaktor, der das Tastverhältnis des Bremschoppers über einen Tastverhältnis-Regler abbildet. Wenn im Rahmen der vorliegenden Erfindung ein Bremschopper eingesetzt wird, kann dadurch vorteilhafterweise die Bremszeit weiter verkürzt werden, weil durch die Vorsehung des Bremschoppers eine zusätzliche Aufnahmemöglichkeit für überschüssige Energie, die beim Bremsen der Werkzeugmaschine frei wird, geschaffen wird.

Die Fähigkeit, elektrische Energie aufzunehmen, kann bei einem Bremschopper begrenzt sein, wenn ein Einschalttastverhältnis von 100 % oder im Wesentlichen 100 % erreicht wird. Um eine solche Beschränkung durch das Einschalttastverhältnis zu umgehen, kann es im Sinne der Erfindung bevorzugt sein, einen vergleichsweise niederohmigen Bremschopper zu verwenden. Vorzugsweise kann der Bremschopper einen elektrischen Widerstand aufweisen, der in einem Bereich von 10 bis 200 Ohm liegt. Solche Bremschopper oder Bremswiderstände werden im Sinne der Erfindung bevorzugt als "niederohmige Bremschopper" bezeichnet.

Wenn die Werkzeugmaschine einen Bremschopper umfasst, kann eine Energieverteilung bei dem vorgeschlagenen Bremsverfahren wie folgt beschrieben werden: Zunächst wird die freiwerdende Bremsenergie in den Zwischenkreis bzw. in die Zwischenkreiskapazität zurückgespeist. Wenn die Zwischenkreiskapazität die Bremsenergie bzw. die Bremsleistung nicht mehr aufnehmen kann, d.h. wenn die Zwischenkreiskapazität ihren Spannungsgrenzwert erreicht hat, kann die verbleibenden überschüssige Energie in den Bremschopper geleitet werden. Wenn der Bremschopper die Bremsenergie bzw. die Bremsleistung nicht mehr aufnehmen kann, kann die Bremsleistung des Motors durch ein kleineres Bremsmoment reduziert werden.

Vorzugsweise kann der Bremswinkels β_brems im Sinne der Erfindung bevorzugt auch als "Statorstromraumzeigerwinkel β_brems" bezeichnet werden. Dieser Bremswinkel β_brems kann im Kontext der vorliegenden Erfindung wie folgt berechnet werden:

$$\beta_{brems} = k_{red} \cdot ( \beta_{brems,\ MTPA} - \beta_{brems,\ 0\ Nm} ) + \beta_{brems,\ 0\ Nm}.$$

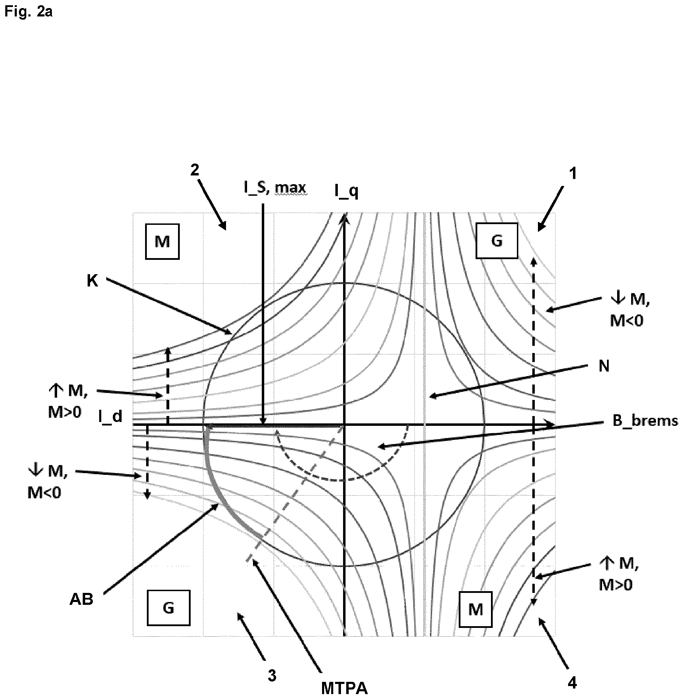

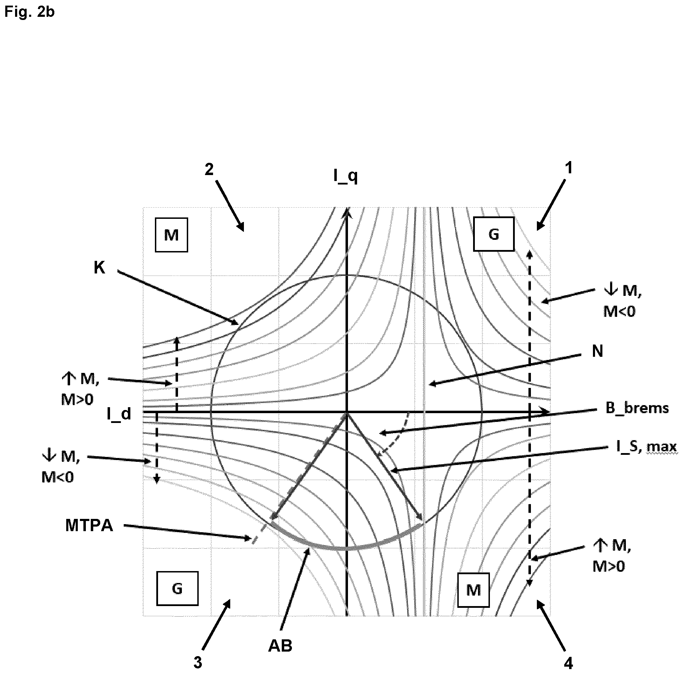

Der Parameter $\beta_{brems,\ MTPA}$ entspricht vorzugsweise dem Winkel auf der MTPA-Kennlinie, während der Parameter $\beta_{brems,\ 0\ Nm}$ dem Stromraumzeigerwinkel entspricht, mit dem ein Arbeitspunkt mit einer Momentenbildung von 0 Nm oder im Wesentlichen 0 Nm erreicht wird. Dieser Arbeitspunkt kann beispielsweise im dritten Quadranten oder im vierten Quadranten der Raumzeigerdarstellung liegen. Dabei soll zum dritten Quadranten explizit auch die Grenze zum zweiten Quadranten zählen (Begrenzung des dritten Quadranten nach oben) und zum vierten Quadranten explizit auch die Grenze zum ersten Quadranten (Begrenzung des vierten Quadranten nach oben). Wie in Figur 2a zu sehen ist, liegt an der Grenze des dritten zum zweiten Quadranten der Schnittpunkt des Stromlimit-Kreises K mit der 0 Nm-Kennlinie der Raumzeigerdarstellung und es wird vorzugsweise kein Drehmoment erzeugt. Wie in Figur 2b zu sehen ist, kann auch der Schnittpunkt des Stromlimit-Kreises K mit der 0 Nm-Kennlinie im vierten Quadranten liegen. Aus dem maximalen Statorstrom I_S, max und dem Stromraumzeigerwinkel $\beta_{brems}$ können vorteilhafterweise die Sollstromwerte, vorzugsweise für die d-Achse und die q-Achse der Raumzeigerdarstellung, berechnet.

Es ist im Sinne der Erfindung bevorzugt, dass das Bremsmoment durch den gedrehten Bremswinkel bzw. Statorstromraumzeigerwinkel β_brems reduziert wird, während die Verluste im Inverter und/oder im Motor der Werkzeugmaschine durch die im Wesentlichen gleichbleibende Motorstromamplitude weiterhin die maximale Bremsleistung aufnehmen, so dass in Summe mit der Erfindung ein besonders schnelles Abbremsen des Werkzeugs der Werkzeugmaschine erreicht werden kann.

Es ist im Sinne der Erfindung bevorzugt, dass ein Arbeitsbereich eines Stromraumzeigers I_S von einem Korrekturfaktor k_red in seiner Länge und/oder in seinem Stromzeigerwinkel begrenzt wird, so dass ein Grenzwert U_ZK, max der Zwischenkreiskapazität nicht überschritten wird. Vorzugsweise kann ein Arbeitsbereich eines Stromraumzeigers I_S von einem Stromlimit eines Inverters der Werkzeugmaschine begrenzt werden, wobei insbesondere die Vorsehung eines Korrekturfaktors k_red, der auf eine Länge und/oder einen Winkel des Stromraumzeigers I_S angewendet werden kann, vorteilhafterweise dazu führt, dass der Grenzwert für die Spannung der Zwischenkreiskapazität nicht überschritten wird. Es ist im Sinne der Erfindung bevorzugt, dass der längste Stromraumzeiger I_S auf der MTPA-Kennlinie liegt, die vorzugsweise durch das Stromlimit des Inverters der Werkzeugmaschine begrenzt wird, wenn ein unbegrenztes Bremsen der Werkzeugmaschine mit größtmöglichem Bremsmoment erfolgt.

Das Überschreiten des Spannungsgrenzwertes der Zwischenkreiskapazität kann gemäß einer Ausgestaltung der vorliegenden Erfindung dadurch verhindert werden, dass ein Korrekturfaktor k_red ermittelt und auf den maximalen Motorstrom I_S, max angewendet wird, so dass ein reduzierter Sollwert I_S, red für den Motorstrom erhalten wird. Vorteilhafterweise kann auf diese Weise eine aktive Regelung der Zwischenkreisspannung ermöglicht werden und ein ausgewogener Kompromiss zwischen einer maximalen Bremsverzögerung und einem Schutz des Zwischenkreises bereitgestellt werden. Die Ermittlung des einen Korrekturfaktors k_red erfolgt vorzugsweise in einem dafür vorgesehen Regler, wobei ein Spannungs-Korrekturfaktor k_red von einem Spannungsregler innerhalb der Elektronik der Werkzeugmaschine bereitgestellt werden kann. Bei dem Spannungsregler handelt es sich vorzugsweise um Spannungsregler des Zwischenkreises. Vorzugsweise ist somit der Zwischenkreis-Spannungsregler dazu eingerichtet, einen Zwischenkreis-Spannungs-Korrekturfaktor k_red zu ermitteln. Der entsprechende Korrekturfaktor k_red kann vorzugsweise Werte in einem Bereich zwischen 0 und 1 annehmen. Als Ausgangsgröße dieses Regelungs- bzw. Korrekturprozesses wird vorzugsweise ein reduzierter Motorstatorsollstrom I_S, red als Ausgangsgröße ausgegeben. Es ist im Sinne der Erfindung bevorzugt, dass dieser reduzierter Motorstatorsollstrom I_S, red auch als reduzierter Motorstrom I_S, red bezeichnet wird. Der fest vorgegebene maximale Motorstrom I_S, max kann somit mit den Korrektur- bzw. Reduktionsfaktor k_red multipliziert werden, so dass ein verminderter Sollstromwert I_S, red an die Motorstromregler weitergegeben werden kann. Vorzugsweise kann ein erster Stromwert, beispielsweise der maximale Motorstrom I_S, max, mit dem Zwischenkreisspannungs-Korrekturfaktor k_red multipliziert werden, um Sollstromwerte, vorzugsweise für die d- und die q-Achse, als zweite Stromwerte im Sinne der Erfindung zu erhalten, mit denen die Werkzeugmaschine weiter betrieben werden kann.

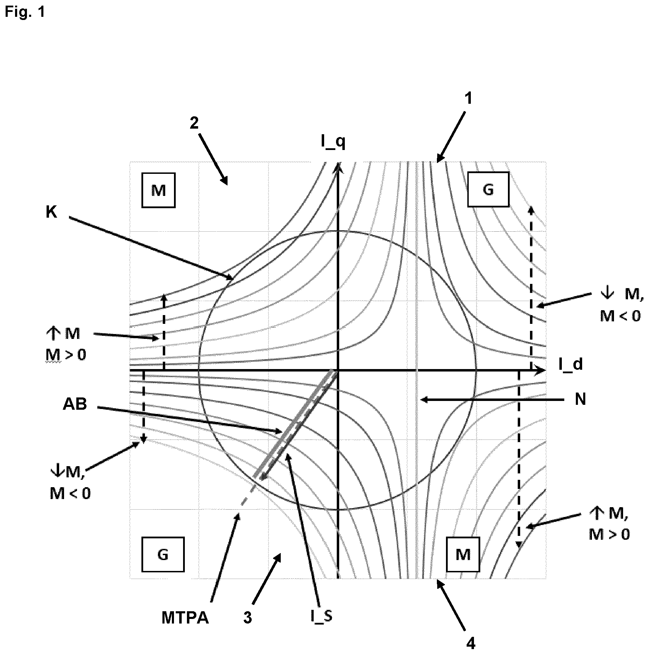

In der entsprechenden Raumzeigerdarstellung (vgl. Figur 1) ist der Arbeitsbereich AB des sog. Stromraumzeigers I_S dargestellt. Ohne eine Begrenzung der Bremsleistung, ergibt sich der längste Stromraumzeigers I_S auf der MTPA-Kennlinie. Der Stromraumzeiger I_S stellt insbesondere einen Statorstromraumzeiger dar, d.h. es wird insbesondere der Raumzeiger für den Statorstrom des Elektromotors der Werkzeugmaschine dargestellt. Es ist im Sinne der Erfindung bevorzugt, dass der Stromraumzeiger I_S durch ein Stromlimit des Inverters der Elektronik der Werkzeugmaschine begrenzt wird. Dieses Stromlimit des Inverters ist in der in Figur 1 abgebildeten Raumzeigerdarstellung ebenfalls dargestellt, und zwar als Kreis K. Vorzugsweise kann der Stromraumzeiger I_S bei Erreichen des Zwischenkreisspannungsgrenzwerts (U_ZK, max) so weit verkürzt werden, dass der Zwischenkreisspannungsgrenzwert nicht überschritten werden. Die Verkürzung des Stromraumzeiger I_S erfolgt vorzugsweise durch die Anwendung des Korrekturfaktors k_red.

Die Bezeichnung "Korrekturfaktor k_red" stellt einen Oberbegriff für Korrekturfaktoren verschiedenen Ursprungs dar. Es kann sich dabei beispielsweise um den Korrekturfaktor k_red zur Begrenzung des maximalen Motorstrom I_S, max auf einen reduzierten Motorstrom I_S, red handeln, wobei im Kontext der Erfindung mindestens ein Korrekturfaktor k_red auf den Sollwert für den maximalen Motorstrom angewendet wird. Ein weiterer Korrekturfaktor k_red kann beispielsweise für eine Begrenzung des Tastverhältnisses (Dutycycle) sorgen, wenn ein Bremschopper verwendet wird., d.h. wenn elektrische Energie nicht nur in die Zwischenkreiskapazität zurückgespeist wird bzw. in Motor- und Elektronikverlusten umgesetzt wird, sondern darüber hinaus in einen Bremswiderstand, der im Sinne der Erfindung bevorzugt als "Bremschopper" bezeichnet wird. Es ist im Sinne der Erfindung bevorzugt, dass der Korrekturfaktor k_red in einem Wertebereich zwischen 0 und 1 liegt.

Es ist im Sinne der Erfindung bevorzugt, dass der Korrekturfaktor k_red durch einen Spannungsregler der Zwischenkreisspannung ermittelt wird oder der Korrekturfaktor k_red zur Begrenzung eines Tastverhältnisses mittels eines Tastverhältnisreglers eingesetzt wird.

Spannungsregler der Zwischenkreiskapazität sind insbesondere dann zur Ermittlung des Korrekturfaktors k_red vorgesehen, wenn kein Bremschopper verwendet wird. Die Werkzeugmaschine bzw. ihre Elektronik kann darüber hinaus oder ergänzend weitere Regler umfassen. Insbesondere, wenn im Kontext der Erfindung ein Bremschopper verwendet wird, kann die Werkzeugmaschine bzw. ihre Elektronik zwei Regler umfassen. Beispielsweise kann ein erster Regler vorgesehen sein, der vorzugsweise als Zweipunktregler mit Hysterese ausgebildet ist und dazu eingerichtet ist, den Bremschopper anzusteuern. Es ist im Sinne der Erfindung bevorzugt, dass dieser erste Regler als Komparator mit Schalthysterese ausgebildet ist, wobei der erste Regler vorzugsweise eine obere Einschaltschwelle und eine untere Ausschaltschwelle umfasst bzw. durch solche Schwellen gekennzeichnet ist. Der erste Regler ist insbesondere dazu ausgebildet, eine Zwischenkreisspannung U_ZK der Zwischenkreiskapazität mit einer Referenzspannung U_Chopper des Bremschoppers zu vergleichen. Das Ausgangssignal des ersten Reglers kann vorzugsweise ein Signal für eine Pulsweitenmodulation (PWM) darstellen oder bilden, wobei der erste Regler insbesondere dann, wenn die Spannung U_ZK der Energieversorgungsvorrichtung größer ist als die Referenzspannung U_Chopper des Bremschoppers, ein High-Pegel-Signal ausgibt. Mit anderen Worten ist der erste Regler dazu eingerichtet, ein PWM-Signal auszugeben, das insbesondere dann, wenn U_ZK > U_Chopper ein High Pegel ist. Das PWM-Signal kann ein Tastverhältnis aufweisen, wobei das Tastverhältnis beispielsweise durch einen Tiefpassfilter gebildet werden kann. Die Schaltschwelle U_Chopper entspricht hierbei vorzugsweise dem Grenzwert U_ZK, max der maximal zulässigen Zwischenkreisspannung.

In einer alternativen Ausgestaltung der Erfindung kann der erste Regler auch als PI-Regler ausgebildet sein. Es ist im Sinne der Erfindung bevorzugt, dass die Ausgangsgröße des bevorzugt als PI-Reglers ausgebildeten ersten Reglers ein Tastverhältnis für den Bremschopper ist. Vorzugsweise können aus diesem Tastverhältnis Ansteuerpulse für den Bremschopper erzeugt werden. Dazu kann beispielsweise ein PWM-Modul verwendet werden. Mit anderen Worten kann das PWM-Modul dazu ausgebildet sein, aus einem Tastverhältnis, das von einem als PI-Regler ausgegeben wird, Ansteuerpulse für einen Bremschopper zu erzeugen.

Die Werkzeugmaschine bzw. ihre Elektronik kann einen zweiten Regler aufweisen, der für die Begrenzung von Tastverhältnissen verwendet wird. Der zweite Regler kann insbesondere dazu ausgebildet sein, das Tastverhältnis auf einen Sollwert D_Soll von maximal ca. 95 % des Einschaltzeittastverhältnis des Bremschoppers zu regeln. Der zweite Regler kann als Ausgangsgröße einen Korrektur- oder Reduktionsfaktor k_red ausgeben, der in einem Wertebereich zwischen 0 und 1 liegt. Es ist im Sinne der Erfindung bevorzugt, dass der Korrekturfaktor k_red mit dem maximalen Motorstatorsollstrom I_S, max multipliziert wird. Auf diese Weise kann vorteilhafterweise der reduzierte Motorstatorsollstrom I_S, red erhalten bzw. ermittelt werden.

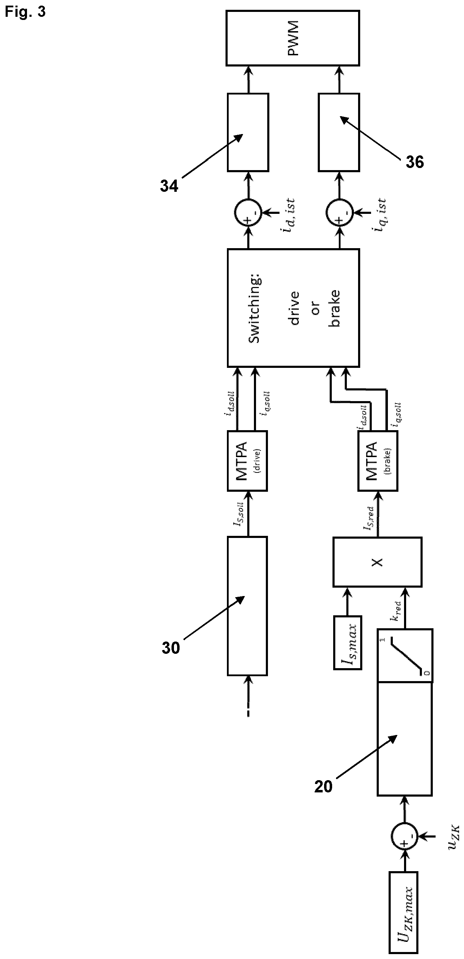

Die Werkzeugmaschine bzw. ihre Elektronik kann eine Begrenzungsvorrichtung für eine Änderungsrate des Motorstroms aufweisen. Die Begrenzungsvorrichtung ist vorzugsweise dazu eingerichtet, einen sanften Übergang vom Antreiben zum Abbremsen der Werkzeugmaschine bzw. ihres Werkzeugs bereitzustellen. Die Begrenzungsvorrichtung kann im Sinne der Erfindung bevorzugt auch als «Änderungsraten-Begrenzer des Motorstroms» bezeichnet werden. Es ist im Sinne der Erfindung bevorzugt, dass die Begrenzungsvorrichtung einen Sprung des Motorstatorsollstroms auf den maximalen Motorstatorstrom I_S, max dadurch vermeidet, dass nur eine maximale Änderungsrate des Motorstatorsollstroms zugelassen wird. Die Änderungsrate wird vorzugsweise in der physikalischen Einheit «Ampere pro Sekunde» angegeben, d.h. Ampere/Sekunde oder A/s. Eine Begrenzungsvorrichtung kann als optionale Komponente an der Werkzeugmaschine vorgesehen sein. Die Begrenzungsvorrichtung kann dann als zusätzlicher Block in den Blockschaltbildern der Figuren 3-6 dargestellt werden, mit dem eine besonders sanfte Transition vom Antreiben zum Abbremsen ermöglicht werden kann.

Das vorgeschlagene Bremsverfahren wird anhand der feldorientierten Regelung (FOC) beschrieben. Es ist aber im Sinne der Erfindung ebenso bevorzugt, das Verfahren mit einer Blockkommutierung durchzuführen. In der Sprache der Raumzeigerdarstellung wird der Arbeitsbereich des Strom- bzw. des Statorstromraumzeigers in Figur 2a und 2b dargestellt.

Die Werkzeugmaschine kann einen Bremschopper umfassen, wobei elektrische Energie, die beim Bremsen des Werkzeugs der Werkzeugmaschine frei wird, von dem Bremschopper aufgenommen wird. Das Bremsverfahren, das von dem Bremschopper Gebrauch macht, stellt ein Bremsverfahren mit effizientem generatorischem Bremsbetrieb mit Bremschopper dar. Es ist im Sinne der Erfindung bevorzugt, dass der Statorstrom I_S erst dann verkürzt wird, wenn der Grenzwert der Zwischenkreisspannung, U_Zk, max, die entsprechenden Begrenzungen erreicht hat. Es kann im Sinne der Erfindung auch bevorzugt sein, dass der Statorstrom I_S dann verkürzt wird, wenn das Einschaltzeittastverhältnis des Bremschoppers seine Begrenzung erreicht hat.

Die Verwendung eines Bremschoppers ist insbesondere dann von Vorteil, wenn die Leistungsaufnahme durch die Zwischenkreiskapazität und die Verluste in den Komponenten begrenzt sind, beispielsweise weil kritische Grenzwerte des Zwischenkreises und/oder der Verlustleistungen der Komponenten überschritten werden. Es ist im Sinne der Erfindung bevorzugt, dass der Bremschopper zusätzlich elektrische Energie aufnehmen kann, die beim Abbremsen der Werkzeugmaschine frei wird. Vorzugsweise können der Zwischenkreis und die Komponentenverluste einen Grundbetrag an elektrischer Energie aufnehmen und der Bremschopper kann als optionaler Bestandteil an der Werkzeugmaschine vorgesehen sein, um zusätzliche elektrische Energie aufzunehmen. Dadurch kann vorteilhafterweise eine besonders hohe Bremsleistung bereitgestellt werden. Es ist im Sinne der Erfindung bevorzugt, dass eine maximale Verlustleistung innerhalb des Bremschoppers je nach Auslegung begrenzt ist. Die Begrenzung ist insbesondere dann erreicht, wenn ein Tastverhältnis, insbesondere ein Einschaltzeittastverhältnis, des Bremschoppers 100 % oder im Wesentlichen 100 % beträgt. Das Tastverhältnis bzw. das Einschaltzeittastverhältnis kann im Sinne der Erfindung bevorzugt auch als Dutycycle D bezeichnet werden. Wenn ein solches Tastverhältnis oder Einschaltzeittastverhältnis von 100 % oder im Wesentlichen 100 % erreicht wird, ist es im Sinne der Erfindung bevorzugt, dass die Bremsleistung durch einen verringerten Motorstrom, insbesondere einen verringerten Motorstatorsollstrom I_S, red reduziert wird. Dies insbesondere deswegen, weil in diesem Fall die Energieversorgungsvorrichtung und der Bremschopper ihre maximale Leistungsaufnahme erreicht haben.

In einem Ausführungsbespiel der Erfindung kann die Werkzeugmaschine unter Vorgabe eines maximalen Motorstroms I_S, max, insbesondere maximalen Motorstatorsollstroms I_S, max, betrieben werden. Es kann dabei ein Korrekturfaktors k_red durch einen Spannungsregler der Zwischenkreisspannung ermittelt werden, wobei der Korrekturfaktor auf den maximalen Motorstroms I_S, max angewendet werden können. Auf diese Weise kann ein reduzierter Sollwert I_S, red für den Motorstrom erhalten werden, der weiter umgerechnet werden kann in die zweiten Stromwerte für den fortgesetzten Betrieb der Werkzeugmaschine, insbesondere die Sollstromwerte für die d- und q-Achse in der Raumzeigerdarstellung. Es ist im Sinne der Erfindung bevorzugt, dass der reduzierte Sollwert I_S, red für den Motorstrom kann an einen Motorstromregler weitergegeben wird, so dass der Motorstrom basierend auf dem reduzierten Sollwert I_S, red geregelt bzw. eingestellt werden kann. Bei diesem Verfahren ergibt sich eine Reduzierung der Bremsleistung durch Verkürzen des Statorstromraumzeigers auf der MTPA-Kennline in der Raumzeigerdarstellung. Insbesondere können Korrekturfaktoren angewendet werden, um den Wert eines maximalen Motorstroms I_S, max auf einen reduzierten Sollwert I_S, red für den Motorstrom zu vermindern.

In einem weiteren Ausführungsbespiel der Erfindung kann die Werkzeugmaschine ein Korrekturfaktor k_red ermitteln, der auf den maximalen Motorstrom I_S, max angewendet wird, um den reduzierten Sollwert I_S, red für den Motorstrom zu erhalten. Der reduzierte Sollwert I_S, red für den Motorstrom kann an einen Motorstromregler weitergegeben werden, so dass der Motorstrom basierend auf dem reduzierten Sollwert I_S, red geregelt bzw. eingestellt werden kann. Auch bei diesem Verfahren ergibt sich eine Reduzierung der Bremsleistung durch Verkürzen des Statorstromraumzeigers auf der MTPA-Kennline in der Raumzeigerdarstellung. Insbesondere kann der mindestens eine Korrekturfaktor angewendet werden, um den Wert eines maximalen Motorstroms I_S, max auf einen reduzierten Sollwert I_S, red für den Motorstrom zu vermindern.

Es ist im Sinne der Erfindung bevorzugt, dass der Motor der Werkzeugmaschine mit Hilfe einer feldorientierten Regelung oder einer Blockkommutierung regelbar ist. In einer bevorzugten Ausgestaltung der Erfindung ist es bevorzugt, dass der Bremswinkel β_brems geändert werden kann, um die Bremsleistung der Werkzeugmaschine zu reduzieren und den Stromraumzeiger I_S, max in der Raumzeigerdarstellung zu drehen. Wenn der Motor der Werkzeugmaschine mit einer Blockkommutierung geregelt wird, kann es im Sinne der Erfindung auch bevorzugt sein, dass die Kommutierungswinkel geändert werden, um die Bremsleistung der Werkzeugmaschine zu reduzieren. In einer bevorzugten Ausgestaltung werden die Kommutierungswinkel derart geändert, dass die dadurch entstehenden Kommutierungsblöcke nacheilend sind. Die Werkzeugmaschine kann einen Bremschopper umfassen, wobei der Bremschopper dazu eingerichtet ist, überschüssige elektrische Energie, die beim Bremsen des Werkzeugs der Werkzeugmaschine frei wird, aufzunehmen. Der Bremschopper ist insbesondere dazu eingerichtet ist, neben der Zwischenkreiskapazität und den Verlustleistungen in den Komponenten zusätzliche elektrische Energie aufzunehmen, die die zuvor genannten Komponenten aufgrund einer begrenzten Leistungsaufnahme nicht mehr aufnehmen können. Diese elektrische Energie wird im Kontext der vorliegenden Erfindung bevorzugt als «überschüssige elektrische Energie» bezeichnet.

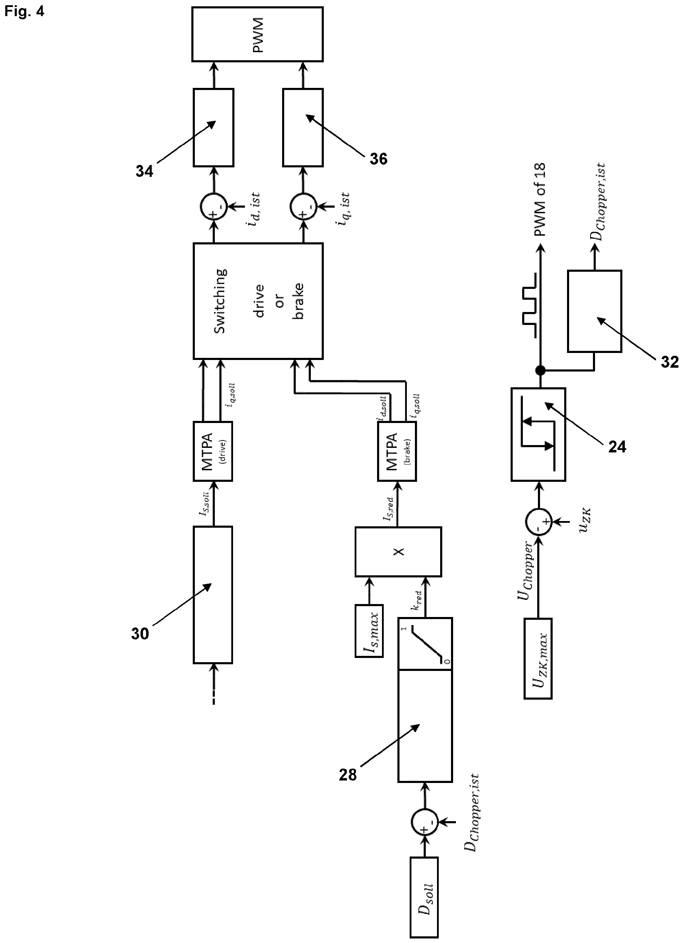

Im Folgenden soll ein Ausführungsbeispiel der Erfindung beschrieben werden, und zwar ein Bremsverfahren mit effizientem generatorischem Bremsbetrieb mit Bremschopper, wie es beispielhaft in Figur 4 dargestellt wird. Das PWM-Signal des Bremschoppers kann in dieser Ausgestaltung der Erfindung wie folgt erzeugt werden, wobei das PWM-Signal insbesondere durch den ersten Regler, beispielsweise einen Zweipunktregler, erfolgt. Der erste Regler kann einen Komparator umfassen oder von einem Komparator gebildet werden. Der Komparator ist dazu eingerichtet, die Zwischenkreisspannung u_ZK mit der Referenzspannung U_Chopperzu vergleichen. Die Höhe der Referenzspannung U_Chopper entspricht dabei vorzugsweise der Spannung des Zwischenkreisspannungsgrenzwertes U_ZK, max.

Wenn die Zwischenkreisspannung u_ZK - ggf. zuzüglich eines Hysterese-Beitrags - größer ist als die Referenzspannung U_Chopper, kann ein High-Pegel am PWM-Signal U_GatedriverinputPWM ausgegeben werden. Anderenfalls wird ein Low-Pegel ausgegeben. Es ist im Sinne der Erfindung bevorzugt, dass die Zwischenkreisspannungswelligkeit und/oder die resultierende Schaltfrequenz über die Breite der Hysterese eingestellt wird.

Es ist im Sinne der Erfindung bevorzugt, das Tastverhältnis des PWM-Signals über einen Tiefpassfilter, vorzugsweise einen RC-Tiefpassfilter, zu ermitteln. Als Regler für das Tastverhältnis können beispielsweise auch PID-Regler verwendet werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1 Arbeitsbereich eines möglichen Statorstromraumzeigers in einer Raumzeigerdarstellung bei effizientem generatorischem Bremsbetrieb

Fig. 2a, b Arbeitsbereich eines möglichen Statorstromraumzeigers in einer Raumzeigerdarstellung bei maximal verlustbehaftetem generatorischem Bremsbetrieb

Fig. 3 mögliches Blockschaltbild «Bremsen» mit effizientem generatorischem Bremsbetrieb ohne Bremschopper

Fig. 4 mögliches Blockschaltbild «Bremsen» mit effizientem generatorischem Bremsbetrieb mit Bremschopper

Fig. 5 mögliches Blockschaltbild «Bremsen» mit maximal verlustbehaftetem generatorischem Bremsbetrieb ohne Bremschopper

Fig. 6 mögliches Blockschaltbild «Bremsen» mit maximal verlustbehaftetem generatorischem Bremsbetrieb mit Bremschopper

Fig. 7 schematische Darstellung einer bevorzugten Ausführungsform der vorgeschlagenen Werkzeugmaschine

## Ausführungsbeispiele und Figurenbeschreibung:

Figur 1 zeigt eine möglich Raumzeigerdarstellung, die den Betrieb einer Werkzeugmaschine 10 abbildet. Insbesondere zeigt Figur 1 den Arbeitsbereich AB eines möglichen Statorstromraumzeigers I_S in einer solchen Raumzeigerdarstellung in einem effizientem generatorischem Bremsbetrieb der Werkzeugmaschine 10. Auf der x-Achse der Raumzeigerdarstellung ist der I_d-Wert des Stromes, der durch den Motor 12 der Werkzeugmaschine 10 fliesst, dargestellt. Eine Werkzeugmaschine 10 ist schematisch in Fig. 8 dargestellt.

Auf der y-Achse der Raumzeigerdarstellung ist der I_q-Wert des Stromes, der durch den Motor 12 der Werkzeugmaschine 10 fliesst, dargestellt. Der Wert I_q steht für die momentbildenden Komponente des Stromes, während der Wert I_d für die feldbildenden Stromkomponente steht.

In Figur 1 sind die vier Quadranten 1, 2, 3 und 4 einer Raumzeigerdarstellung dargestellt. Der erste Quadrant 1 ist durch ein negativ ansteigendes Drehmoment ↓M und einen Generatorbetrieb G gekennzeichnet. Der zweite Quadrant 2 ist durch ein positiv ansteigendes Drehmoment ↑M und einen Motorbetrieb M gekennzeichnet. Der dritte Quadrant 3 ist durch ein negativ ansteigendes Drehmoment ↓M und einen Motorbetrieb M gekennzeichnet. Der vierte Quadrant 4 ist durch ein positiv ansteigendes Drehmoment ↑M und einen Generatorbetrieb G gekennzeichnet. Die ansteigenden bzw. abfallenden Drehmomente der Drehmomenthyperbeln werden in den Figuren 1 und 2 durch gestrichelte Pfeile symbolisiert. Die Drehmomenthyperbeln werden vorzugsweise von Arbeitspunkten mit gleichem Drehmoment gebildet. In Figur 1 ist ein Kreis K eingezeichnet, wobei der Kreis K das Stromlimit eines Inverters der Werkzeugmaschine 10 darstellt. Der Kreis K bzw. das Stromlimit des Inverters liegt zu gleichen Teilen in den vier Quadranten 1, 2, 3, 4 der Raumzeigerdarstellung, was gleichbedeutend damit ist, dass ein Mittelpunkt des Kreises K mit dem Schnittpunkt der y- und der x-Achse der Raumzeigerdarstellung zusammen fällt. Der Arbeitsbereich AB des Statorstromraumzeigers I_S ist im dritten Quadranten 3 der Raumzeigerdarstellung eingezeichnet. In der in Figur 1 dargestellten Raumzeigerdarstellung fällt der Arbeitsbereich AB des Statorstromraumzeigers I_S mit der MTPA-Kennlinie der Werkzeugmaschine 10 zusammen. Der Motor 12 der Werkzeugmaschine 10 wird dadurch vorteilhafterweise an einem wirkungsgradoptimierten Arbeitspunkt betrieben, in dem die Stromwärmeverluste minimal sind.

Durch den ersten Quadranten 1 und den vierten Quadranten 4 verläuft die 0 Nm-Kennlinie N, die im Wesentlichen parallel zu der y-Achse der Raumzeigerdarstellung verläuft. Darüber hinaus ergibt sich eine zweite 0 Nm-Kennlinie N2, welche auf der x-Achse verläuft bzw. mit der x-Achse zusammenfällt (daher nicht dargestellt). Die in Figur 1 abgebildete Raumzeigerdarstellung zeigt eine Werkzeugmaschine 10 bzw. deren Betrieb, bei der die Bremsleistung der Werkzeugmaschine 10 dadurch reduziert wird, dass mindestens ein Korrekturfaktor k ermittelt und auf einen maximalen Motorstrom I_S, max der Werkzeugmaschine 10 angewendet wird, so dass ein reduzierter Sollwert I_S, red für den Motorstrom erhalten wird. Dies entspricht einem effizienten generatorischen Bremsbetrieb der Werkzeugmaschine 10.

In den Figuren 2a und 2b wird eine Raumzeigerdarstellung eines maximal verlustbehafteten generatorischen Bremsbetriebs einer Werkzeugmaschine 10 dargestellt. Abweichend zu Figur 1, wird bei den in Figur 2 dargestellten Bremsverfahren ein Stromraumzeigers I_S, max in der Raumzeigerdarstellung durch Anwendung eines geänderten Bremswinkels β_brems gedreht, so dass eine Länge des Stromraumzeigers I_S, max im Wesentlichen unverändert bleibt und die Bremsleistung der Werkzeugmaschine 10 reduziert wird. Der Stromraumzeigers I_S, max befindet sich anfänglich im dritten Quadranten 3 der Raumzeigerdarstellung, gelangt aber durch die Drehung in Figur 2a auf die Grenze zwischen dem zweiten Quadranten 2 und dem dritten Quadranten 3. Der Stromraumzeigers I_S, max befindet sich anfänglich im dritten Quadranten 3 der Raumzeigerdarstellung, gelangt aber durch die Drehung in Figur 2b in den vierten Quadranten 4. Der Bremswinkel β_brems ist ebenfalls im vierten Quadranten 4 der Raumzeigerdarstellung eingezeichnet. Der gedrehte Stromraumzeiger I_S, max schneidet im vierten Quadranten 4 den Kreisbereich K, der das Stromlimit des Inverters der Elektronik der Werkzeugmaschine 10, wobei dieser Schnittpunkt des gedrehten Stromraumzeigers I_S, max und des Kreisbereichs K in dem in Figur 2 abgebildeten Ausführungsbeispiel der Erfindung mit dem Schnittpunkt des Kreisbereichs K und der 0 Nm-Kennlinie N zusammen fällt. Der Arbeitsbereich AB ist daher auf Arbeitspunkte zwischen den Zuständen "maximales Bremsmoment" und "kein Bremsmoment, d.h. 0 Nm" begrenzt.

Es sei angemerkt, dass die in den Figuren 3 bis 6 dargestellten Blockschaltbilder beispielhaft Bremsverfahren für eine Werkzeugmaschine 10 zeigen, bei denen der Motor 12 mit einer feldorientierten Regelung betrieben wird. Das vorgeschlagene Verfahren kann selbstverständlich auch mit einer Werkzeugmaschine 10 durchgeführt werden, bei der der Motor 12 mit einer Blockkommutierung geregelt wird. Der Motor 12 der Werkzeugmaschine 10 ist ein bürstenloser Motor, der vorzugsweise eine Leistung von mehr als 1.800 Watt (W) abgeben kann.

Fig. 3 zeigt ein mögliches Blockschaltbild «Bremsen» mit effizientem generatorischem Bremsbetrieb einer Werkzeugmaschine 10 ohne Bremschopper 18. Bei den in Figur 3 abgebildeten Bremsverfahren ist der Zwischenkreisspannungsregler 20 dazu eingerichtet, einen Korrekturfaktor k_red für die Spannung der Zwischenkreiskapazität 14 auszugeben. Darüber hinaus ist ein Drehzahlregler 30 vorgesehen, der die Drehzahl n der Werkzeugmaschine 10 regelt. Als Ausgangs- bzw. Stellgrößen des Bremsverfahrens werden Sollstromwerte erhalten, die an die Motorstromregler 34, 36 weitergeben werden können. Bei den Sollstromwerten kann es sich vorzugsweise um Sollstromwerte für die d- und die q-Achse der Raumzeigerdarstellung handeln. Die Motorstromregler 34, 36 stellen insbesondere einen d-Strom-Regler 34 und einen q-Strom-Regler 36 dar, wobei die Motorstromregler 34, 36 ihre Steuerbefehle an die Pulsweitenmodulation PWM weitergeben.

Fig. 4 zeigt ein mögliches Blockschaltbild «Bremsen» mit effizientem generatorischem Bremsbetrieb einer Werkzeugmaschine 10 mit Bremschopper 18. In dem in Figur 4 dargestellten Blockschaltbild sind der Drehzahlregler 30 und die Motorstromregler 34, 36 abgebildet, die bereits aus Figur 3 und dem dort gezeigten Blockschaltbild bekannt sind. Darüber hinaus ist in Figur 4 ein Tastverhältnis-Regler 28 dargestellt, der im Sinne der Erfindung bevorzugt auch als «zweiter Regler» bezeichnet werden kann und zur Begrenzung des Tastverhältnis auf einen Sollwert D_soll von beispielsweise 95 % verwendet wird. Der Ausgangswert dieses zweiten Reglers ist ein Korrekturfaktor k_red, der zwischen den Werten 0 und 1 liegt. Dieser Korrekturfaktor k_red kann mit dem Strom I_S, max multipliziert werden, um den reduzierten Motorstatorsollstrom I_S, red zu erhalten.

Darüber hinaus zeigt das in Figur 4 dargestellte Blockschaltbild einen Zweipunktregler 24 mit Hysterese, der im Sinne der Erfindung bevorzugt als «erster Regler» bezeichnet wird. Dieser erste Regler 24 wird vorzugsweise zur Ansteuerung des als «Bremschopper» bezeichneten Bremswiderstands 18 verwendet. Der erste Regler 24 kann beispielsweise als Komparator mit Schalthysterese ausgebildet sein und dazu eingerichtet sein, eine Zwischenkreisspannung mit einer Referenzspannung zu vergleichen. Die Zwischenkreisspannung kann vorzugsweise auch als Spannung u_ZK bezeichnet werden, während die Referenzspannung in Figur 4 mit der Bezeichnung «U_Chopper» bezeichnet wird. Der erste Regler 24 gibt als Ausgangssignal ein PWM-Signal aus, das ein High-Pegel ausgibt, wenn die Akkuspannung größer ist als die Referenzspannung, d.h. u_ZK > u_Chopper. Ein Tastverhältnis des PWM-Signals kann beispielsweise durch den in Figur 4 dargestellten Tiefpassfilter 32 gebildet werden. Es ist im Sinne der Erfindung bevorzugt, dass zeitliche veränderliche Werte oder Größen mit Kleinbuchstaben bezeichnet werden, während konstante Werte oder Größen, wie Grenzwerte oder andere vorgegebene Werte, mit Großbuchstaben bezeichnet werden.

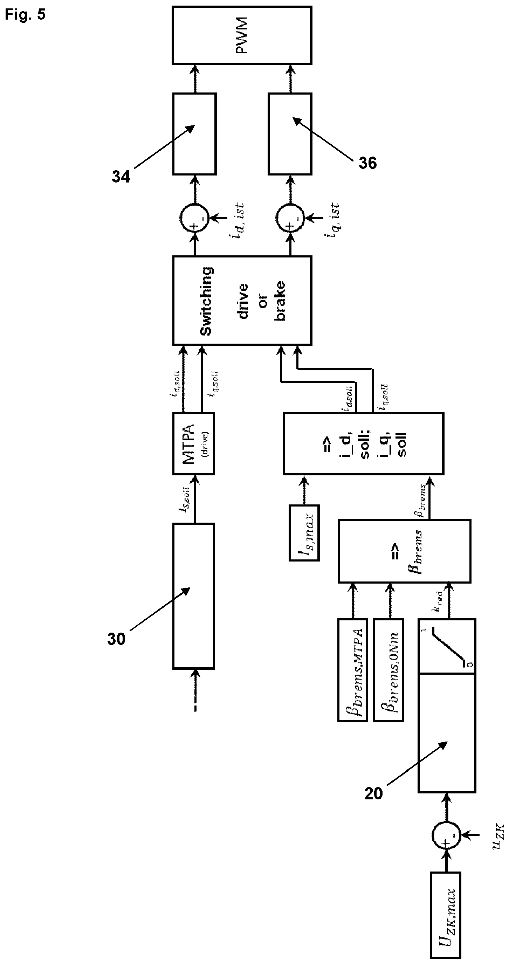

Fig. 5 zeigt ein mögliches Blockschaltbild «Bremsen» mit maximal verlustbehaftetem generatorischem Bremsbetrieb einer Werkzeugmaschine 10 ohne Bremschopper 18. Ähnlich zu dem Blockschaltbild der Figur 3 werden bei dem in Figur 5 beschriebenen Bremsverfahren der Korrekturfaktor k_red ausgegeben.

Insbesondere kann der Korrekturfaktor k_red vom Zwischenkreisspannungs-Regler 20 ermittelt werden. Aus dem Korrekturfaktor k_red kann der Statorstromraumzeigerwinkel oder Bremswinkel β_brems berechnet werden. Dazu werden die Winkel β_brems, MTPA und β_brems, 0 Nm voneinander abgezogen und mit dem Korrekturfaktor k_U, red multipliziert. Zu dem Produkt kann der β_brems, 0 Nm erneut hinzuaddiert werden, so dass der Bremswinkel β_brems erhalten wird. Der Parameter β_brems, MTPA steht vorzugsweise für den Winkel auf der MTPA-Kennlinie, während der Parameter β_brems, 0 Nm dem Statorstromraumzeigerwinkel im vierten Quadranten 4 der Raumzeigerdarstellung oder dem Statorstromraumzeigerwinkel auf der x-Achse zwischen zweiten Quadranten 2 und dritten Quadranten 3 entspricht, an dem kein Drehmoment erzeugt wird. Dieser Parameter β_brems, 0 Nm im vierten Quadranten 4 ergibt sich vorzugsweise aus dem Schnittpunkt des Stromlimit-Kreises K mit der 0 Nm-Kennlinie N. Mit Hilfe des Bremswinkels β_brems und des Stroms I_S, max können die d- und q-Sollwerte berechnet werden, die an den d-Strom-Regler 34 und den q-Strom-Regler 36 weitergeleitet werden können.

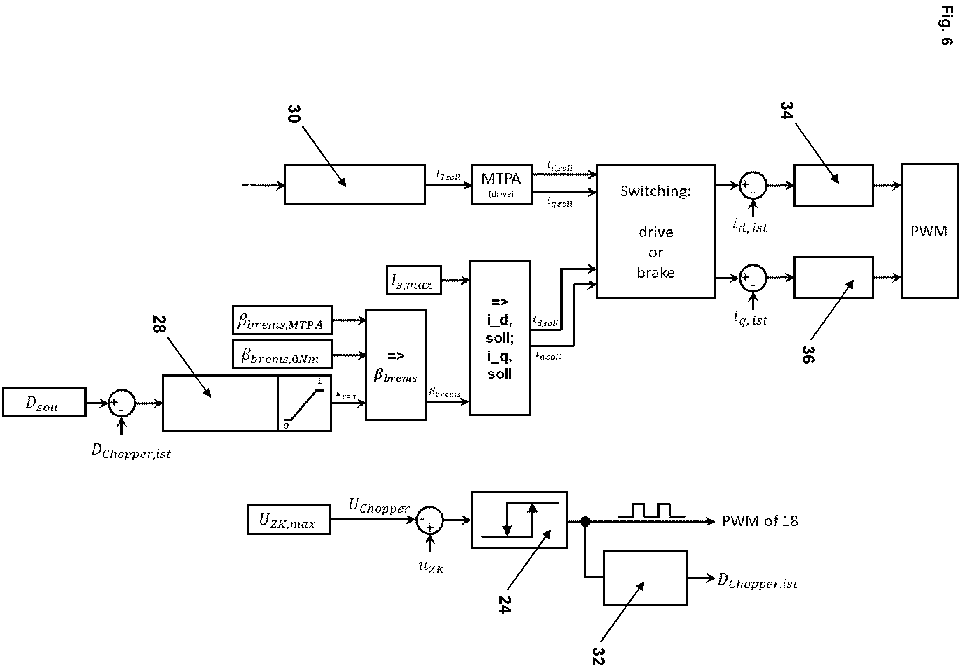

Fig. 6 zeigt ein mögliches Blockschaltbild «Bremsen» mit maximal verlustbehaftetem generatorischem Bremsbetrieb einer Werkzeugmaschine 10 mit Bremschopper 18, wobei sich das in Figur 6 dargestellte Blockschaltbild in weiten Teilen eine Kombination von Elementen der Blockschaltbilder aus den Figuren 4 und 5 darstellt.

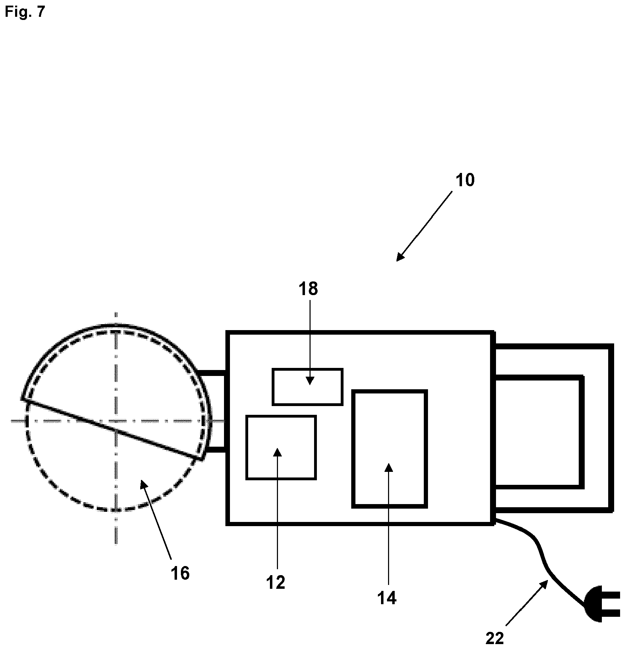

Figur 7 zeigt eine schematische Darstellung einer bevorzugten Ausgestaltung der vorgeschlagenen Werkzeugmaschine 10. Die Werkzeugmaschine 10 weist einen Motor 12 auf, der vorzugsweise als bürstenloser Motor ausgebildet ist. Die Werkzeugmaschine 10 kann ein Werkzeug 16 aufweisen, das beispielsweise als scheibenförmiges Schneidwerkzeug ausgebildet sein kann. Bei der in Figur 4 abgebildeten Werkzeugmaschine 10 handelt es sich vorzugsweise um einen Trennschleifer, mit dem Schnitte in einen Untergrund, wie Beton, eingebracht werden können. Das Werkzeug 16 der Werkzeugmaschine 10 kann von einem Blattschutz (ohne Bezugszeichen) umgeben sein, um den Nutzer der Werkzeugmaschine 10 vor Späne- und Funkenflug zu schützen. Die Werkzeugmaschine 10 kann über ein Stromkabel 22 mit einem öffentlichen oder Baustellen-Stromnetz verbunden werden, um mit elektrischer Energie versorgt zu werden. Die Werkzeugmaschine 10 weist einen Zwischenkreis 14 auf, in den überschüssige elektrische Energie, die beim Bremsen der Werkzeugmaschine 10 frei wird, eingespeist werden kann. Der Zwischenkreis 14 kann einen Zwischenkreiskondensator oder mehrere Zwischenkreiskondensatoren mit einer Zwischenkreiskapazität aufweisen. Die Werkzeugmaschine 10 kann als optionalen Bestandteil einen Bremschopper 18 aufweisen. Im Kontext der vorliegenden Erfindung kann elektrische Energie in den Zwischenkreis 14 zurückgespeist werden, dies insbesondere dann, wenn die Werkzeugmaschine 10 abgebremst wird. Vorzugsweise kann elektrische Energie auch in den Bremschopper 18 der Werkzeugmaschine 10 zurückgespeist werden, dies insbesondere dann, wenn die Aufnahmefähigkeit der übrigen Komponenten der Werkzeugmaschine 10, wie beispielsweise die Aufnahmefähigkeit des Zwischenkreises 14, ausgeschöpft ist. Die Werkzeugmaschine 10 kann darüber hinaus einen oder mehrere Handgriffe (ohne Bezugszeichen) aufweisen, mit denen der Nutzer die Werkzeugmaschine 10 transportieren oder bei der Arbeit führen kann.

## Bezugszeichenliste

| 1 | 1. Quadrant der Raumzeigerdarstellung |
|---|---|
| 2 | 2. Quadrant der Raumzeigerdarstellung |
| 3 | 3. Quadrant der Raumzeigerdarstellung |
| 4 | 4. Quadrant der Raumzeigerdarstellung |
| 10 | Werkzeugmaschine |
| 12 | Motor |
| 14 | Zwischenkreis |
| 16 | Werkzeug |
| 18 | Bremschopper |
| 20 | Spannungsregler des Zwischenkreises |
| 22 | Netzanschluss bzw. Stromkabel der Werkzeugmaschine |
| 24 | erster Regler, insbesondere Zwischenkreisspannungs-Regler |
| 28 | zweiter Regler, insbesondere Tastverhältnis-Regler |
| 30 | Drehzahlregler |
| 32 | Tiefpassfilter |
| 34 | d-Strom-Regler |
| 36 | q-Strom-Regler |
| M | Motorbetrieb |
| G | Generatorbetrieb |
| I_d | Drehmoment |

| I_q | Drehmoment |
|---|---|
| ↑M | positiv ansteigendes Drehmoment |
| ↓M | negativ ansteigendes Drehmoment |
| K | Kreisbereich als Stromlimit des Inverters |
| AB | Arbeitsbereich des Statorstromraumzeigers |
| N | 0 Nm-Kennlinie |
| MTPA | MTPA-Kennlinie (Maximum Torque per Ampere bzw. maximales Drehmoment pro Ampere |
| β_brems | Bremswinkel |
| PWM | Pulsweitenmodulation |
| n | Drehzahl |
| t | Zeit |

**Patentansprüche**

1. Verfahren zum Bremsen einer Werkzeugmaschine (10), wobei die Werkzeugmaschine (10) eine netzbetriebene Werkzeugmaschine ist und elektrische Energie, die beim Bremsen der Werkzeugmaschine (10) frei wird, in einen Zwischenkreis (14) der Werkzeugmaschine (10) zurückgespeist wird,
**gekennzeichnet durch die folgenden Verfahrensschritte:**

   a) Betrieb der Werkzeugmaschine (10) unter Vorgabe eines ersten Stromwerts,
   b) Rückspeisung der elektrischen Energie, die beim Bremsen der Werkzeugmaschine (10) frei wird, in den Zwischenkreis (14) der Werkzeugmaschine (10),
   c) Reduzierung einer Bremsleistung der Werkzeugmaschine (10), wenn ein Grenzwert der Spannung des Zwischenkreises (14) überschritten wird,
   d) Weiterbetrieb der Werkzeugmaschine (10) mit Sollstromwerten, wobei die Sollstromwerte basierend auf der Reduzierung der Bremsleistung der Werkzeugmaschine (10) und des ersten Stromwerts berechnet werden.

2. Verfahren nach Anspruch 1,
**dadurch gekennzeichnet, dass**
die Werkzeugmaschine (10) entlang einer verlustleistungsoptimierten Kennlinie betrieben wird.

3. Verfahren nach Anspruch 1,
**dadurch gekennzeichnet, dass**
die Werkzeugmaschine (10) entlang einer MTPA-Kennlinie in einer Raumzeigerdarstellung betrieben wird.

4. Verfahren nach Anspruch 3,
**dadurch gekennzeichnet, dass**
die Sollstromwerte Sollstromwerten für die d- und die q-Achse der Raumzeigerdarstellung sind.

5. Verfahren nach einem der vorhergehenden Ansprüche,
**dadurch gekennzeichnet, dass**
die Bremsleistung der Werkzeugmaschine (10) durch den folgenden Verfahrensschritt reduziert wird:
e) Drehung eines Stromraumzeigers I_S, max in der Raumzeigerdarstellung durch Anwendung eines geänderten Bremswinkels β_brems, so dass eine Länge des Stromraumzeigers I_S, max im Wesentlichen unverändert bleibt.

6. Verfahren nach einem der Ansprüche 1 bis 4,
**dadurch gekennzeichnet, dass**
die Bremsleistung der Werkzeugmaschine (10) durch die folgenden Verfahrensschritte reduziert wird:

   f) Ermittlung von mindestens einem Korrekturfaktor k_red und
   g) Anwendung des mindestens einen Korrekturfaktors k auf einen maximalen Motorstrom I_S, max, wodurch ein reduzierter Sollwert I_S, red für den Motorstrom erhalten wird.

7. Verfahren nach Anspruch 6
**dadurch gekennzeichnet, dass**
der mindestens eine Korrekturfaktor k_red in einem Wertebereich zwischen 0 und 1 liegt.

8. Verfahren nach Anspruch 6 oder 7

**dadurch gekennzeichnet, dass**
der mindestens eine Korrekturfaktor k_red von der Ausgangsgröße eines Zwischenkreis-Spannungsreglers gebildet wird und/oder zur Begrenzung eines Tastverhältnisses eines optionalen Bremschoppers mittels eines Tastverhältnis-Reglers gebildet wird.

9. Verfahren nach einem der vorhergehenden Ansprüche
**dadurch gekennzeichnet, dass**
die Werkzeugmaschine (10) einen Bremschopper (18) umfasst, wobei elektrische Energie, die beim Bremsen des Werkzeugs (16) der Werkzeugmaschine (10) frei wird, von dem Bremschopper (18) aufgenommen wird.

10. Verfahren nach einem der vorhergehenden Ansprüche
**dadurch gekennzeichnet, dass**
eine Regelung eines Motors (12) der Werkzeugmaschine (10) eine feldorientierte Regelung oder eine Blockkommutierung umfasst.

11. Werkzeugmaschine (10) zur Durchführung des Verfahrens nach einem der vorhergehenden Ansprüche
**dadurch gekennzeichnet, dass**
ein Motor (12) der Werkzeugmaschine (10) ein bürstenloser Motor ist.

12. Werkzeugmaschine (10) nach Anspruch 14
**dadurch gekennzeichnet, dass**
die Werkzeugmaschine (10) einen Bremschopper (18) umfasst, wobei der Bremschopper (18) dazu eingerichtet ist, elektrische Energie, die beim Bremsen des Werkzeugs (16) der Werkzeugmaschine (10) frei wird, aufzunehmen.

**Fig. 1**

**Fig. 2a**

Fig. 2b

**Fig. 3**

**Fig. 4**

**Fig. 5**

Fig. 6

EP 4 535 649 A1

**Fig. 7**

**Europäisches Patentamt**
**European Patent Office**
**Office européen des brevets**

## EUROPÄISCHER RECHERCHENBERICHT

Nummer der Anmeldung

EP 23 20 2010

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CN 215 990 345 U (ZHEJIANG CROWN ELECTRIC TOOL MFG LIMITED COMPANY) 8. März 2022 (2022-03-08) * Absatz [0052]; Abbildungen 1,6 * ----- | 1-12 | INV. H02P21/36 B25F5/00 |
| Y | US 2017/233926 A1 (JUNG HEE SOK [KR] ET AL) 17. August 2017 (2017-08-17) * Absätze [0056], [0066] * ----- | 1-12 | |
| A | WO 2023/137412 A1 (MILWAUKEE ELECTRIC TOOL CORP [US]) 20. Juli 2023 (2023-07-20) * Absatz [0133]; Abbildung 17 * ----- | 1-12 | |
| Y | US 2017/234484 A1 (VANKO JOHN C [US] ET AL) 17. August 2017 (2017-08-17) * Anspruch 7 * ----- | 8,9,12 | |

RECHERCHIERTE SACHGEBIETE (IPC)

H02P
B25H
B25F

Der vorliegende Recherchenbericht wurde für alle Patentansprüche erstellt

| Recherchenort | Abschlußdatum der Recherche | Prüfer |
|---|---|---|
| München | 8. März 2024 | Schneider, Gernot |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...........................
& : Mitglied der gleichen Patentfamilie, übereinstimmendes
  Dokument

EPO FORM 1503 03.82 (P04C03)

# EP 4 535 649 A1

## ANHANG ZUM EUROPÄISCHEN RECHERCHENBERICHT
## ÜBER DIE EUROPÄISCHE PATENTANMELDUNG NR.

EP 23 20 2010

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2024

| Im Recherchenbericht angeführtes Patentdokument | Datum der Veröffentlichung | Mitglied(er) der Patentfamilie | Datum der Veröffentlichung |
|---|---|---|---|
| CN 215990345 U | 08-03-2022 | KEINE | |
| US 2017233926 A1 | 17-08-2017 | CN 107086828 A | 22-08-2017 |
| | | KR 20170096530 A | 24-08-2017 |
| | | US 2017233926 A1 | 17-08-2017 |
| WO 2023137412 A1 | 20-07-2023 | KEINE | |
| US 2017234484 A1 | 17-08-2017 | EP 3292959 A1 | 14-03-2018 |
| | | US 2017234484 A1 | 17-08-2017 |

EPO FORM P0461

Für nähere Einzelheiten zu diesem Anhang : siehe Amtsblatt des Europäischen Patentamts, Nr.12/82